# EUROPEAN PATENT APPLICATION

(11) **EP 1 146 768 A2**
(43) Date of publication of application: **17.10.2001**
(21) Application number: 01109320.0
(22) Date of filing: 12.04.2001
(51) Int. Cl.: H04Q 11/04, H04L 12/56

(54) **Load distribution device and method**

(30) Priority: 13.04.2000 JP 2000112150
(71) Applicant: NEC CORPORATION, Tokyo (JP)
(72) Inventor: Takatama, Hirokazu, Minato-ku, Tokyo (JP); Iwata, Atsushi, Minato-ku, Tokyo (JP)
(74) Representative: VOSSIUS & PARTNER

(57) **Abstract**

A load distribution device allowing the failure recovery process to be executed at the high performance rate and in a short time is disclosed. A link state memory (8) retrievably stores link state information of the connection-oriented network. The link state database is used to dynamically calculate an alternate route for failure recovery when a failure notification is received. A route candidate database (10) retrievably stores a plurality of route candidates for each of possible endpoint nodes. A load distribution route calculator (5) determines a route for a normally set up connection such that a route having a relatively small load is selected from a plurality of route candidates with a relatively high probability.

## Description

The present invention relates to network failure recovery techniques, and in particular to a load distribution failure recovery system and method allowing autonomous connection recovery when a failure occurs on an in-progress connection in a network, for example, a connection-oriented network or Internet Protocol (IP) network.

A conventional technique for network failure recovery has been disclosed in, for example. "Private Network-Network-Interface Specification Version 1.0 (PNNI 1.0)" (The ATM Forum Technical Committee, af-pnni-0055.000, March, 1996).

In an ATM (asynchronous transfer mode) network employing protocols such that a connection is established using a source routing system in which a route is calculated based on link state information exchanged between nodes, when a failure is detected by means of hardware or regular transmission of a control message between adjacent nodes, a failure notification message is transferred to respective nodes along the connection path.

An entry node that is a node connected to a source terminal originating a connection request receives the failure notification message and thereby dynamically calculates an alternate route as a failure recovery path so as to avoid the faulty node or link by referring to the link state information of its own.

The "link state information" is information indicating network configuration and its usage patterns of node resources, link resources and the like. Here, the node resource can be represented by the link resource.

And, the connection can be restored by setting up the alternate connection along the calculated route (the failure recovery connection path to avoid the faulty node or link).

A link state database provided in the entry node is updated by an autonomous exchange of messages between nodes. At that time, since it takes much time to transmit the message between nodes, sometimes the contents of link state database mismatches with the actual link states. As the result, in some cases, the link state information stored in the database used for route calculation does not reflect the actual link states at the timing of connection setup. These mismatches of link state information may induce some failures in connection setup due to lack of link resources and other causes. In this case, rerouting process is needed to set up a connection along another route that is calculated again by the entry node. This process is called "Crankback" in PNNI (Private Network-to-Network Interface) described in the above document ("Private Network-Network-Interface Specification Version 1.0 (PNNI 1.0)" The ATM Forum Technical Committee, af-pnni-0055.000, March, 1996).

However, the conventional failure recovery system as described above has the following disadvantages.

First, in the case where a failure occurs in unevenly use of link resources, the failure recovery rate becomes low. When plural failure recovery systems detect a failure in such a case that a plurality of connections are disconnected due to link fault or nodal failure, each of the failure recovery systems autonomously calculates an alternate route for failure recovery and sets up the connection almost simultaneously. Then, in the case of uneven use of link resources, heavily loaded links and lightly loaded links are mixed.

Here, a heavily loaded link is concretely a link as follows:
- an available bandwidth is narrow,
- a delay is long, or
- a fluctuation of data arrival intervals is long.

Although the failure recovery system tries to set up a recovery connection to avoid such a heavily loaded link, it is difficult to avoid all of such heavily loaded links in the case where plural heavily loaded links are localized, resulting in a narrow choice of alternatives. Accordingly, connections set up by the failure recovery systems are concentrated on a specific link. This causes lack of resource in the specific line and high possibility that a connection fails to be set up, resulting in low failure recovery rate.

Second, the time required for completing a failure recovery becomes long in the case where a failure occurs in uneven use of link resources. The reason is that, when the first failure recovery connection fails to be set up, a rerouting process is executed with an alternate route. Since the alternate route has to be calculated to set up the connection again, it takes longer to complete the failure recovery.

Another conventional technique for network failure recovery has been disclosed in "Fault Recovery for Guaranteed Performance Communications Connections (IEEE/ACM TRANSACTIONS ON NETWORKING, VOL, 7, NO. 5, pp.653-668, OCTOBER 1999). However, this conventional technique teaches fault recovery after the occurrence of link faults only, and does not discuss Quality of Service (QoS) routing when normally operating, that is, before a link fault occurs.

An object of the present invention is to provide a load distribution device and method allowing the failure recovery process to be executed at the high performance rate and in a short time.

According to the present invention, a load distribution device provided in each of nodes included in a network, includes: a link state memory retrievably storing link state information of the network, wherein the link state database is used to dynamically calculate an alternate route for failure recovery when a failure notification is received; a route
candidate memory retrievably storing a plurality of route candidates for each of possible endpoint nodes; and a route determiner for determining a route for a normally set up connection, wherein a route having a relatively small load is selected from a plurality of route candidates with a relatively high probability.

The route determiner may include: a route quality checker for checking quality of each of the route candidates by referring to the link state information stored in the link state memory when receiving a connection setup request; and a route candidate selector for selecting the route for a requested connection from the route candidates depending on the quality of each of the route candidates.

The load distribution device may further include an alternate route determiner for determining an alternate route when a failure notification is received, wherein a route having a relatively small load is selected as the alternate route from a plurality of route candidates with a relatively high probability.

The alternate route determiner may include: a route quality checker for checking quality of each of the route candidates by referring to the link state information stored in the link state memory when receiving a failure notification message; and a route candidate selector for selecting the alternate route for failure recovery from the route candidates depending on the quality of each of the route candidates.

As described above, a route determiner is provided to select a route having high efficiency in load distribution from the plurality of route candidates when a connection setup request is received from a terminal. Since a lightly loaded route is determined, the link resources can be evenly used so as to avoid causing heavily loaded links to be localized in the network.

Here, the route having high efficiency in load distribution means a route allowing many lightly loaded links to be accommodated.

Fig. 1 is a block diagram showing the basic configuration of a load distribution failure recovery system according to the present invention;

Fig. 2 is a block diagram showing the configuration of a load distribution failure recovery system according to a first embodiment of the present invention;

Fig. 3 is a diagram showing an example of an ATM network to explain the first embodiment of the present invention:

Fig. 4 is a diagram showing an example of alternative routes to explain the first embodiment of the present invention;

Fig. 5A is a diagram showing an example of the contents of a link state database in the first embodiment of the present invention;

Fig. 5B is a diagram showing an example of communication qualities of route candidates in the first embodiment of the present invention;

Fig. 6 is a block diagram showing the configuration of a load distribution failure recovery system according to a second embodiment of the present invention;

Fig. 7 is a diagram showing an example of an ATM network to explain the second embodiment of the present invention;

Fig. 8A is a diagram showing an example of the contents of a link state database in the second embodiment of the present invention; and

Fig. 8B is a diagram showing an example of communication qualities of route candidates in the second embodiment of the present invention.

Hereafter, preferred embodiments of the present invention are described in detail by referring to the drawings.

According to the present invention, a load distribution device is provided so as to allow connections set up when normally operating to use evenly the link resources of the network.

### BASIC SYSTEM CONFIGURATION

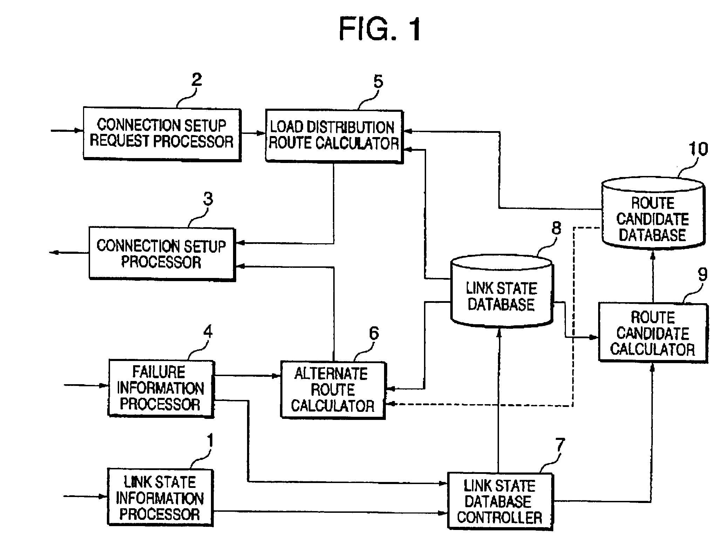

Referring to Fig. 1, a load distribution failure recovery system is provided with a link state information processor 1, a connection setup request processor 2, a connection setup processor 3, and a failure information processor 4. The link state information processor 1 exchanges link state information messages with the adjacent node. The connection setup request processor 2 receives a connection setup request from a terminal. The connection setup processor 3 transmits a connection setup message to the endpoint node to set up a connection to the endpoint node. The failure information processor 4 exchanges failure information notification messages with the adjacent node.

The load distribution failure recovery system is further provided with a load distribution route calculator 5. an alternate route calculator 6, a link state database controller 7. a link state database 8. a route candidate calculator 9. and a route candidate database 10.

The link state database 8 retrievably stores link state information indicating network topology and the use pattern of link resources in the network. The link state database 8 is updated. by the link state database controller 7.

The route candidate database 10 stores route candidates reaching all the endpoint nodes to possibly communicate with. The route candidate calculator 9 calculates a plurality of different route candidates for each possible endpoint node and the route information of a calculated route candidate is registered in the route candidate database 10. In this case, route information of a route indicates all of nodes or links involved in the route.

The link state information processor 1 exchanges link state information messages with the adjacent node. When receiving a ling state information message from the adjacent node, the link state information processor 1 starts the link state database controller 7 to update the link state database 8 so that the contents of the link state database 8 reflects the received link state information.

Similarly, the link state database controller 7 is also activated when the failure information processor 4 has received a failure information notification message. When receiving the failure information notification message, the failure information processor 4 starts the link state database controller 7 to update the link state database 8 so that the contents of the link state database 8 reflects the received failure information.

The route candidate calculator 9 is activated after the link state database controller 7 has updated the link state database 8 and calculates possible route candidates reaching all endpoint nodes each having the possibility of communication by referring to the link state database 8. The calculated results are stored in the route candidate database 10.

The route candidate calculator 9, as described before, calculates a plurality of different route candidates for each possible endpoint node. For the purpose of load distribution, this route candidate calculation is preferably performed so that nodes and links involved in the respective route candidates are not shared among them.

The load distribution route calculator 5 is activated after the connection setup request processor 2 has received a connection setup request from a terminal and calculates a route to the requested endpoint node by referring to the route candidate database 10 and the link state database 8.

The alternate route calculator 6 is activated after the failure information processor 4 has received a failure information notification message and calculates an alternate route that avoids the faulty link or node indicated by the failure information notification message by referring to the link state database 8.

### FIRST EMBODIMENT

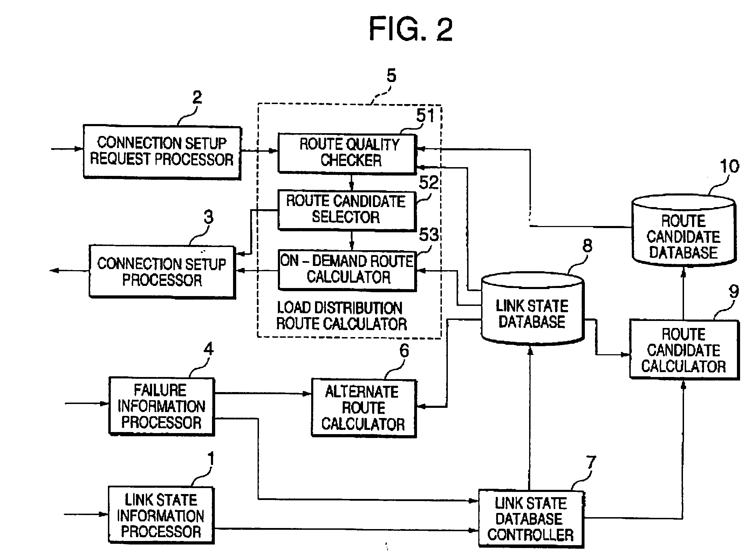

Referring to Fig. 2, a load distribution failure recovery system according to a first embodiment of the present invention is provided with a load distribution route calculator 5 that includes a route quality checker 51, a route candidate selector 52 and an on-demand route calculator 53.

The route quality checker 51 is activated after the connection setup request processor 2 has received a connection setup request from a terminal. When activated, the route quality checker 51 detects the endpoint node from the connection setup request message and then searches the route candidate database 10 to obtain route candidates reaching the detected endpoint node. Thereafter, the route quality checker 51 checks the communication quality of each of the obtained route candidates by referring to the link state database 8.

Among the obtained route candidates, the route candidate selector 52 selects a route candidate that satisfies the requested quality level and has the highest efficiency in load distribution.

A selection method of a route having high load-distribution efficiency is as follows:
- to select a route having the broadest available bandwidth; and
- to select a route using an available-bandwidth weighted round robin fashion or a simple round robin fashion.

Although the weighted round robin fashion can select all routes satisfying the requested quality level, a route having a broader bandwidth is more likely to be selected because a route is selected according to a proportion of available bandwidth.

The following selection methods may be adopted:
- to select a route having the shortest time delay and the smallest fluctuation in data arrival interval among the route candidates satisfying the requested quality; and
- to select a route using a round-robin fashion weighted by the reciprocal of a value of delay time or fluctuation in data arrival interval.

The on-demand route calculator 53 is started when the route candidate selector 52 cannot find a route candidate satisfying the requested communication quality from the route candidates, and then searches the link state database 8 to calculate a route satisfying the requested quality.

### Operation

Next, an overall operation of the first embodiment will be described in detail with reference to Fig. 2.

In the case where a link state information message is received from an adjacent node, the link state information processor 1 determines whether the received link state information is different from the stored link state information in the link state database 8 of its own node. If it is determined that the received link state information is different from the stored link state information and update of the link state database 8 is needed, the link state information processor 1 instructs the link state database controller 7 to update the stored link state information of the link state database 8.

Further, if the received link state information message is required to transmit to other nodes, the link state information processor 1 performs flooding the received link state information to an adjacent node. The above database update and message flooding processes are performed at each of the nodes in the network and eventually the link state information over the network is stored in the link state database 8 of each of the nodes on the network.

When the link state database controller 7 determines that the route candidate database 10 should be updated as the link state database 8 is updated, the link state database controller 7 starts the route candidate calculator 9.

The route candidate calculator 9 calculates possible route candidates reaching all endpoint nodes each having the possibility of communication by referring to the link state database 8. The calculated route candidate information for each possible endpoint node is stored in the route candidate database 10.

In the case where a connection setup request message is received from a terminal, the route quality checker 51 is activated. The route quality checker 51 determines the endpoint node from the received connection setup request message, and obtains the route candidates reaching the endpoint node from the route candidate database 10. Then, the route quality checker 51 searches the link state database 8 to check the communication quality of each of the obtained route candidates. Thereafter, the route candidate selector 52 selects from the quality checked route candidates a route candidate satisfying the requested communication quality level and having the high efficiency in load distribution.

When the route candidate selector 52 selects the appropriate route, the selected route is transferred to the connection setup processor 3, which starts connection setup according to the selected route. When no match is found in the route candidate selector 52, the on-demand route calculator 53 calculates a route satisfying the requested communication quality level.

In the case where a failure information message is received from an adjacent node, the failure information processor 4 starts the link state database controller 7 to update the link state database 8 so that the contents of the link state database 8 reflects the received failure information. Thereafter, the alternate route calculator 6 calculates an alternate route that avoids the faulty link or node indicated by the failure information notification message by referring to the link state database 8. The calculated alternate route information is transferred to the connection setup processor 3. which starts connection setup according to the calculated alternate route.

As described above, according to the first embodiment of the present invention, since the load distribution route calculator 5 selects a route having the high efficiency in load distribution upon receipt of a connection setup request from a terminal. the link resources can be evenly used. As the result, at the time of the occurrence of a failure, a range of available route candidates for failure recovery to select from becomes wider because of no heavily loaded links.

When plural connections are disconnected due to a link or node failure, a plurality of failure recovery systems almost simultaneously start to set their recovery connections. In the first embodiment of the present invention, the recovery connection has a wider range of available failure recovery route candidates to select from, thereby decreasing such a possibility that the connection setup concentrates on a specific link and reducing a possibility of failure in connection setup.

In the first embodiment of the present invention, the following functional means can be implemented by running function programs on a computer of the load distribution failure recovery system (node): the link state information processor 1, the connection setup request processor 2, the connection setup processor 3, the failure information processor 4, the alternate route calculator 6, the link state database controller 7, the route candidate calculator 9, and the load distribution route calculator 5 composed of the route quality checker 51, the route candidate selector 52 and the on-demand route calculator 53. These functional programs are read out to be executed from an appropriate recording medium such as CD-ROM. DVD (Digital Versatile Disk), HD (Hard disk), FD (Floppy disk), a magnetic tape, a semiconductor memory, and so on). Alternatively, these programs may be downloaded from a server and so on through a wired or wireless communication medium to be installed in the computer of the node.

### Example I

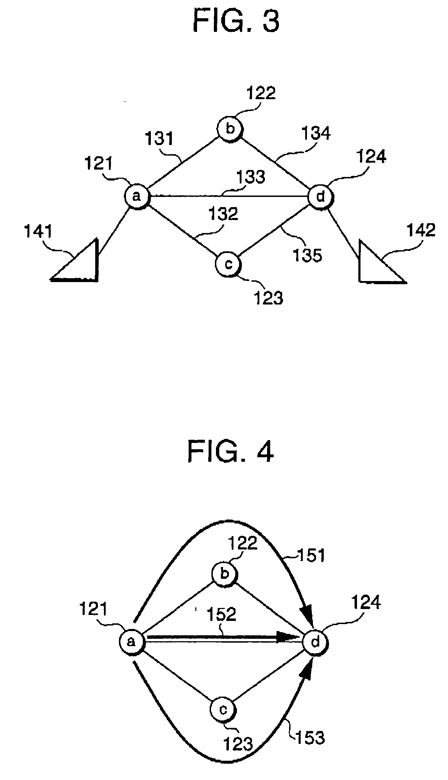

An example of an operation in the first embodiment will be described with reference to Figs. 3-5.

Referring to Fig. 3, it is assumed for simplicity that an ATM network is composed of nodes 121-124 and links 131-135, which are connected such that
- the link 131 connects the node 121 with the node 122,
- the link 132 connects the node 121 with the node 123,
- the link 133 connects the node 121 with the node 124,
- the link 134 connects the node 122 with the node 124, and
- the link 135 connects the node 123 with the node 124.

Also, a terminal 141 connects with the node 121, and a terminal 142 connects with the node 124.

### Route candidate calculation

First, an example where a node calculates a route candidate in the above ATM network will be described by referring to Fig. 4.

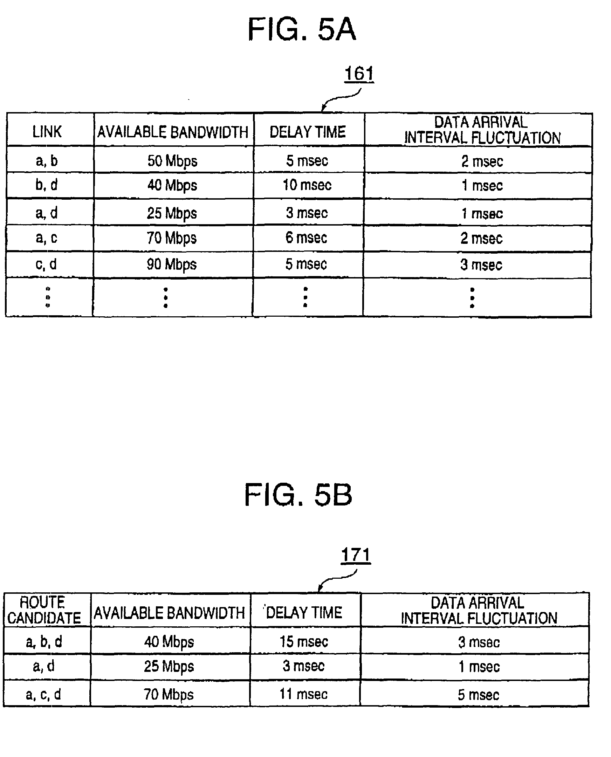

In Fig. 5, it is assumed that the node 121 calculates three route candidates 151-153 from the node 121 to the node 124: the route candidate 151 passing through the node 122; the route candidate 152 reaching directly to the node 124; and the route candidate 153 passing through the node 123.

The route candidates 151, 152 and 153 can be calculated, for example, by using the Dijkstra algorithm several times. The Dijkstra algorithm is used to obtain the route candidate with a minimum cost.

In the case of the link cost being "1", the route candidate 152 is determined as a route from the node 121 to the node 124 with a minimum cost.

Next, on a first reduced network getting rid of the link 133 included in the route candidate 152, the route candidate 151 is obtained as a route with a minimum cost, for example.

Furthermore, on a second reduced network getting rid of the links 131 and 134 included in the route candidate 151, the route candidate 153 is obtained as a route with a minimum cost.

The information about the obtained route candidates is stored in the route candidate database 10. The Beellman-Ford algorithm may be used to calculate a plurality of route candidates.

### Connection setup

Next, when a node receives a connection setup request information from a terminal in the ATM network as shown in Fig. 3, an operation of the first embodiment will be described with reference to Figs. 2, 5A and 5B.

It is assumed that parameters representing communication quality are as follows: available bandwidth: delay time: and fluctuation in data arrival interval.

An available bandwidth of a route is defined as the smallest value of available bandwidths on the links involved in the route.

Delay time of a route is defined by the total of delay time on the links involved in the route.

Fluctuation in data arrival interval of a route is defined by the total of data arrival interval fluctuation time on the links involved in the route.

Now, it is assumed that the terminal 141 transmits a connection setup request message to the node 121 to set up a connection satisfying the following requirements: a maximum bandwidth is 30 Mbps; delay time is 15 msec or less; and fluctuation in data arrival interval is also 15 msec or less.

When the node 121 receives a connection setup request message, the route quality checker 51 is activated. The route quality checker 51 determines the endpoint node 124 from the received connection setup request message, and obtains the route candidates 151-153 reaching the endpoint node 124 from the route candidate database 10. Then, the route quality checker 51 searches the link state database 8 to check the communication quality of each of the obtained route candidates 151-153.

Referring to Fig. 5A, a table 161 shows an example of the link state database 8 provided in the node 121. The table 161 is a relational table having a link field, an available bandwidth field, a delay time field, and a data arrival interval fluctuation field.

As shown in Fig. 5A. for example, the links (a, b) and (b, d) forming the route candidate 151 have available bandwidths of 50Mbps and 40Mbps, respectively. Since the available bandwidth of a route is defined as the smallest value of available bandwidths on the links involved in the route, the available bandwidth of the route candidate 151 turns out to be 40 Mbps.

The delays of the links (a, b) and (b, d), as shown in Fig. 5A, are 5 msec and 10 msec, respectively. Since the time delay of a route is the total of delay time on the links involved in the route, the time delay in route candidate 151 turns out to be 15 msec.

The fluctuation in data arrival interval of the links (a. b) and (b, d), as shown in Fig. 5A, are 2 msec and 1 msec, respectively. Since the fluctuation in data arrival interval of a route is defined by the total of data arrival interval fluctuation time on the links involved in the route, the data arrival interval fluctuation of the route candidate 151 turns out to be 3 msec.

Similarly, as for the route candidate 152, the available bandwidth is 25 Mbps, the time delay is 3 msec, and the data arrival interval fluctuation is 1 msec. As for the route candidate 153, the available bandwidth is 70 Mbps, the time delay is 11 msec, and the data arrival interval fluctuation is 5 msec.

As shown in Fig. 5B, the above communication qualities of the route candidates 151, 152 and 153 are summarized in a table 171. In other words, the route quality checker 51 produces the communicating quality of each of the route candidates 151, 152 and 153 selected from the route candidate database 10 as shown in the table 171 of Fig. 5B by referring to the table 161 as shown in Fig. 5A stored in the link state database 8.

In this case, the communication quality required for the connection setup is an available bandwidth of 30 Mbps, the time delay of 15 msec, and the data arrival interval fluctuation of 15 msec. Since the route candidate 152 has an available bandwidth of only 25 Mbps, it does not satisfy the requirement. Therefore, the route candidate selector 52 selects either the route candidate 151 or the route candidate 153.

In the case where a route candidate having the broadest available bandwidth is selected as a load distribution route, the route candidate 153 is selected.

In the case where a route candidate is selected according to the weighted round robin fashion using an available bandwidth as a weight, the route candidates 151 and 153 are selected in proportions of 40 : 70.

In the case where a route candidate having the shortest delay is selected as a load distribution route, the route candidate 153 is also selected.

In the case where a route candidate is selected according to the weighted round robin fashion using the reciprocal of value of a delay time as a weight, the route candidates 151 and 153 are selected in proportions of 1/15 : 1/11.

In the case where a route candidate having the shortest data arrival interval fluctuation is selected as a load distribution route, the route candidate 151 is selected.

In the case where a route candidate is selected according to the weighted round robin fashion using the reciprocal of value of data arrival interval fluctuation as a weight, the route candidates 151 and 153 are selected in proportions of 1/3 ; 1/5.

### SECOND EMBODIMENT

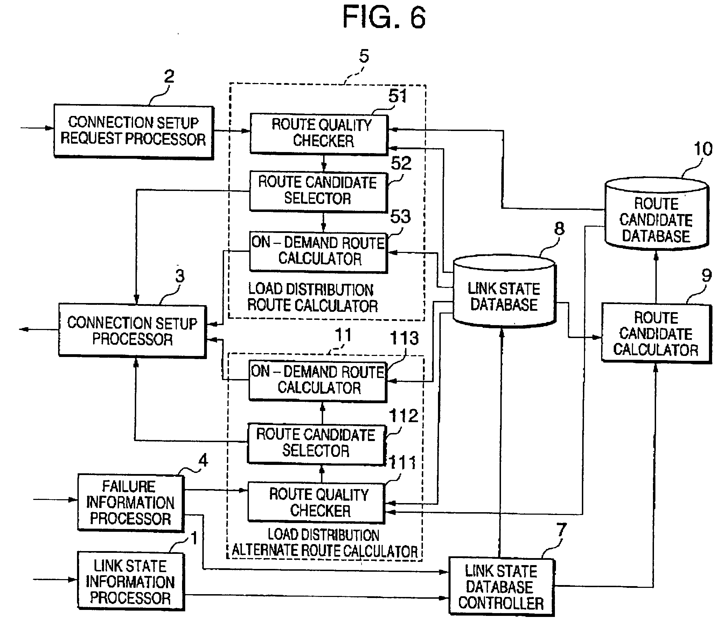

Next, a second embodiment of the present invention will be described with reference to Fig. 6, in which circuit blocks similar to those previously described with reference to Fig. 2 are denoted by the same reference numerals and the detailed descriptions thereof will be omitted.

Referring to Fig. 6, a load distribution failure recovery system according to a second embodiment of the present invention is provided with a load distribution alternate route calculator 11 that includes a route quality checker 111, a route candidate selector 112 and an on-demand route calculator 113.

The route quality checker 111, when activated by the failure information processor 4 receiving a failure information message, detects the endpoint node from the received failure information message, and then searches the route candidate database 10 to obtain route candidates reaching to the detected endpoint node. Thereafter, the route quality checker 111 checks the communication quality of each of the obtained route candidates by referring to the link state database 8.

Among the obtained route candidates, the route candidate selector 112 selects a route candidate that satisfies the requested quality level and has the highest efficiency in load distribution. The selected route candidate information is transferred to the connection setup processor 3.

On the other hand, when no match is found in the route candidate selector 112, the on-demand route calculator 113 calculates a route satisfying the requested communication quality level by referring to the link state database 8. The calculated route is transferred to the connection setup processor 3.

In the second embodiment of the present invention, the following functional means can be implemented by running function programs on a computer of the load distribution failure recovery system (node): the link state information processor 1, the connection setup request processor 2, the connection setup processor 3, the failure information processor 4, the alternate route calculator 6, the link state database controller 7, the route candidate calculator 9, the load distribution route calculator 5 composed of the route quality checker 51, the route candidate selector 52 and the on-demand route calculator 53, and the load distribution alternate route calculator 11 including the route quality checker 111, the route candidate selector 112 and the on-demand route calculator 113. These functional programs are read out to be executed from an appropriate recording medium such as CD-ROM, DVD (Digital Versatile Disk), HD (Hard disk), FD (Floppy disk), a magnetic tape, a semiconductor memory, and so on). Alternatively, these programs may be downloaded from a server and so on through a wired or wireless communication medium to be installed in the computer of the node.

### Example II

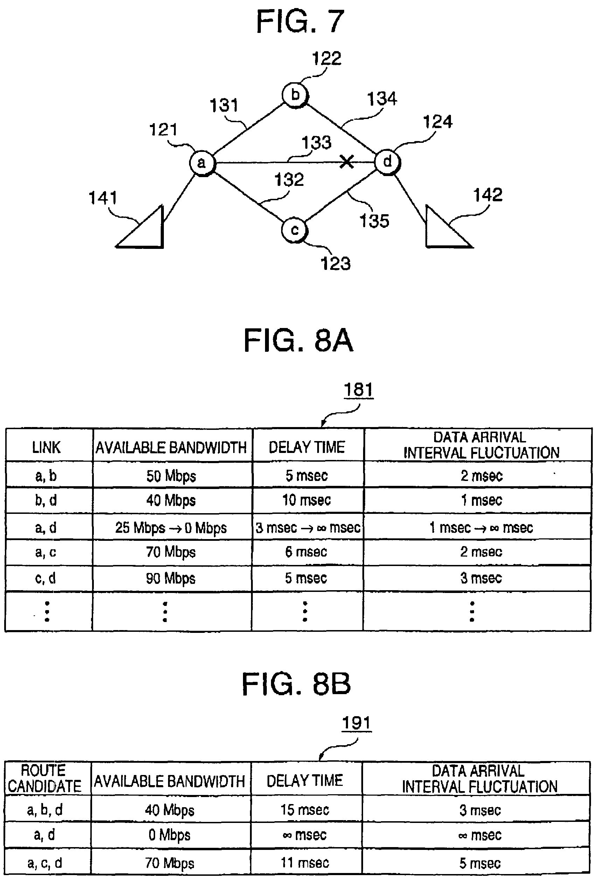

Next, an operation in the second embodiment will be described by referring to Figs. 7, 8A and 8B. In Fig. 7, nodes and links similar to those previously described with reference to Fig. 3 are denoted by the same reference numerals.

Now, it is assumed that the connection between the nodes 121 and 124 is disconnected because of the occurrence of a failure on the link 133 as shown in Fig. 7 and further that the disconnected connection on the link 133 requires the bandwidth of 30 Mbps, the delay time of 15 msec or less, and the data arrival interval fluctuation of 15 msec or less.

First, when the failure information processor 4 of the node 121 receives a failure information notification message indicative of the occurrence of a failure on the link 133, the link state database controller 7 updates the contents of the link state database 8 so that the available bandwidth of the link (a, d) is changed to 0 Mbps, the delay time to ∞ msec (∞ refers to infinity), the data arrival interval fluctuation to ∞ msec, as shown in a table 181 of Fig. 8A.

Next, the route quality checker 111 searches the route candidate database 10 to obtain the route candidates 151 (a-b-d), 152 (a-d), and 153 (a-c-d), each of which reaches to the node 124. Thereafter, the route quality checker 111 searches the link state database 8 storing the table 181 of Fig. 8A to check the communication quality of each of the route candidates 151, 152 and 153.

As shown in Fig. 8A, for example, the links (a, b) and (b, d) forming the route candidate 151 have available bandwidths of 50Mbps and 40Mbps, respectively. Since the available bandwidth of a route is defined as the smallest value of available bandwidths on the links involved in the route, the available bandwidth of the route candidate 151 turns out to be 40 Mbps.

The delays of the links (a, b) and (b, d), as shown in Fig. 8A, are 5 msec and 10 msec, respectively. Since the time delay of a route is the total of delay time on the links involved in the route, the time delay in route candidate 151 turns out to be 15 msec.

The fluctuation in data arrival interval of the links (a, b) and (b, d), as shown in Fig. 8A, are 2 msec and 1 msec, respectively. Since the fluctuation in data arrival interval of a route is defined by the total of data arrival interval fluctuation time on the links involved in the route, the data arrival interval fluctuation of the route candidate 151 turns out to be 3 msec.

As for the route candidate 153, similarly, the available bandwidth is 70 Mbps, the time delay is 11 msec, and the data arrival interval fluctuation is 5 msec.

As for the route candidate 152, however, the available bandwidth is 0 Mbps, the time delay is ∞ msec, and the data arrival interval fluctuation is ∞ msec because the failure occurs on the link 133 between the node 121 and the node 124.

As shown in Fig. 8B, the above communication qualities of the route candidates 151, 152, and 153 are summarized in a table 191.

Next, the route candidate selector 112 selects the route candidate having the high efficiency in load distribution and satisfying the communication quality of the disconnected connection from the route candidates 151, 152 and 153.

Since the disconnected connection on the link 133 requires the bandwidth of 30 Mbps, the delay time of 15 msec or less, and the data arrival interval fluctuation of 15 msec or less, the route candidates 151 and 153 satisfy the communication quality level.

In the case where a route candidate having the broadest available bandwidth is selected as a load distribution route, the route candidate 153 is selected.

In the case where a route candidate is selected according to the weighted round robin fashion using an available bandwidth as a weight, the route candidates 151 and 153 are selected in proportions of 40 : 70.

In the case where a route candidate having the shortest delay is selected as a load distribution route, the route candidate 153 is also selected.

In the case where a route candidate is selected according to the weighted round robin fashion using the reciprocal of value of a delay time as a weight, the route candidates 151 and 153 are selected in proportions of 1/15 : 1/11.

In the case where a route candidate having the shortest data arrival interval fluctuation is selected as a load distribution route, the route candidate 151 is selected.

In the case where a route candidate is selected according to the weighted round robin fashion using the reciprocal of value of data arrival interval fluctuation as a weight, the route candidates 151 and 153 are selected in proportions of 1/3 : 1/5.

As described above, according to the second embodiment of the present invention, the load distribution alternate route calculator 11 selects a route having the high efficiency in load distribution, resulting in a reduced possibility that the failure recovery connection setup concentrates on a specific link and a reduced possibility of failure in connection setup.

According to the present invention, a route having high efficiency in load distribution is selected as a normally setup connection and a failure recovery connection instead of a disconnected connection due to the occurrence of a failure. As the result, the link resources are evenly used and at the time of the occurrence of a failure, a range of available route candidates for failure recovery to select from becomes wider because of no heavily loaded links. In other words, even if a plurality of failure recovery systems almost simultaneously start to set their recovery connections, a possibility that the connection setup concentrates on a specific link and a possibility of failure in connection setup can be reduced. resulting in improved failure recovery rate.

In addition, since the connection setup at the time of failure recovery is likely to be successfully performed, the number of times the rerouting process is executed can be reduced, resulting in shortened time required for failure recovery.

## Claims

1. A load distribution device provided in each of nodes included in a network, comprising:
a link state memory (8) retrievably storing link state information of the network, wherein the link state database is used to dynamically calculate an alternate route for failure recovery when a failure notification is received;
a route candidate memory (10) retrievably storing a plurality of route candidates for each of possible endpoint nodes;
**characterized by**
route determining means (5) for determining a route for a normally set up connection, wherein a route having a relatively small load is selected from a plurality of route candidates with a relatively high probability.

2. The load distribution device according to claim 1, wherein the route determining means comprises:
a route quality checker (51) for checking quality of each of the route candidates by referring to the link state information stored in the link state memory when receiving a connection setup request; and
a route candidate selector (52) for selecting the route for a requested connection from the route candidates depending on the quality of each of the route candidates.

3. The load distribution device according to claim 2, wherein the route candidate selector selects a route candidate having a broadest available bandwidth as the route for a requested connection.

4. The load distribution device according to claim 2, wherein the route candidate selector selects a route candidate as the route for a requested connection from the route candidates in a round robin fashion.

5. The load distribution device according to claim 2, wherein the route candidate selector selects a route candidate as the route for a requested connection from the route candidates in a weighted round robin fashion using an available bandwidth of each of the route candidates as a weight.

6. The load distribution device according to claim 2, wherein the route candidate selector selects a route candidate having a shortest delay time as the route for a requested connection among the route candidates satisfying a requested quality.

7. The load distribution device according to claim 2, wherein the route candidate selector selects a route candidate having a smallest fluctuation in data arrival interval as the route for a requested connection among the route candidates satisfying a requested quality.

8. The load distribution device according to claim 2, wherein the route candidate selector selects a route candidate as the route for a requested connection from the route candidates in a weighted round robin fashion using a reciprocal of delay time for each of the route candidates as a weight.

9. The load distribution device according to claim 2, wherein the route candidate selector selects a route candidate as the route for a requested connection from the route candidates in a weighted round robin fashion using a reciprocal of fluctuation in data arrival interval for each of the route candidates as a weight.

10. The load distribution device according to any one of claims 1 to 9 further comprising:
an on-demand route calculator (53) for calculating a route satisfying a requested quality by referring to the link state memory when no route candidate is found in the route candidate selector.

11. The load distribution device according to any one of claims 1 to 10 further comprising:
alternate route determining means (11) for determining an alternate route when a failure notification is received, wherein a route having a relatively small load is selected as the alternate route from a plurality of route candidates with a relatively high probability.

12. The load distribution device according to claim 11, wherein the alternate route determining means comprises:
a route quality checker (111) for checking quality of each of the route candidates by referring to the link state information stored in the link state memory when receiving a failure notification message; and
a route candidate selector (112) for selecting the alternate route for failure recovery from the route candidates depending on the quality of each of the route candidates.

13. The load distribution device according to claim 12. wherein the route candidate selector selects a route candidate having a broadest available bandwidth as the alternate route for failure recovery.

14. The load distribution device according to claim 12, wherein the route candidate selector selects a route candidate as the alternate route for failure recovery from the route candidates in a round robin fashion.

15. The load distribution device according to claim 12, wherein the route candidate selector selects a route candidate as the alternate route for failure recovery from the route candidates in a weighted round robin fashion using an available bandwidth of each of the route candidates as a weight.

16. The load distribution device according to claim 12, wherein the route candidate selector selects a route candidate having a shortest delay time as the alternate route for failure recovery among the route candidates satisfying a required quality.

17. The load distribution device according to claim 12, wherein the route candidate selector selects a route candidate having a smallest fluctuation in data arrival interval as the alternate route for failure recovery among the route candidates satisfying a required quality.

18. The load distribution device according to claim 12, wherein the route candidate selector selects a route candidate as the alternate route for failure recovery from the route candidates in a weighted round robin fashion using a reciprocal of delay time for each of the route candidates as a weight.

19. The load distribution device according to claim 12, wherein the route candidate selector selects a route candidate as the alternate route for failure recovery from the route candidates in a weighted round robin fashion using a reciprocal of fluctuation in data arrival interval for each of the route candidates as a weight.

20. The load distribution device according to any one of claims 12 to 19 further comprising:
an on-demand route calculator (113) for calculating an alternate route satisfying a required quality by referring to the link state memory when no route candidate is found in the route candidate selector.

21. A load distribution method in each of nodes included in a network, comprising the steps of:
a) retrievably storing link state information of the network, wherein the link state database is used to dynamically calculate an alternate route for failure recovery when a failure notification is received;
b) retrievably storing a plurality of route candidates for each of possible endpoint nodes; and
**characterized by**
c) determining a route for a normally set up connection, wherein a route having a relatively small load is selected from a plurality of route candidates with a relatively high probability.

22. The load distribution method according to claim 21, wherein the step (c) comprises the steps of:
checking quality of each of the route candidates by referring to the link state information when receiving a connection setup request: and
selecting the route for a requested connection from the route candidates depending on the quality of each of the route candidates.

23. The load distribution method according to claim 21, further comprising the step of:
d) determining an alternate route when a failure notification is received, wherein a route having a relatively small load is selected as the alternate route from a plurality of route candidates with a relatively high probability.

24. The load distribution method according to claim 23, wherein the step (d) comprises the steps of:
checking quality of each of the route candidates by referring to the link state information when receiving a failure notification message; and
selecting the alternate route for failure recovery from the route candidates depending on the quality of each of the route candidates.

25. A recording medium storing a computer program for performing a load distribution operation in each of nodes included in a network, the computer program comprising the steps of:
a) retrievably storing link state information of the network. wherein the link state database is used to dynamically calculate an alternate route for failure recovery when a failure notification is received;
b) retrievably storing a plurality of route candidates for each of possible endpoint nodes; and
**characterized by**
c) determining a route for a normally set up connection, wherein a route having a relatively small load is selected from a plurality of route candidates with a relatively high probability.

26. The recording medium according to claim 25, wherein the step (c) comprises the steps of:
checking quality of each of the route candidates by referring to the link state information when receiving a connection setup request; and
selecting the route for a requested connection from the route candidates depending on the quality of each of the route candidates.

27. The recording medium according to claim 25, further comprising the step of:
d) determining an alternate route when a failure notification is received, wherein a route having a relatively small load is selected as the alternate route from a plurality of route candidates with a relatively high probability.

28. The recording medium according to claim 27, wherein the step (d) comprises the steps of:
checking quality of each of the route candidates by referring to the link state information when receiving a failure notification message; and
selecting the alternate route for failure recovery from the route candidates depending on the quality of each of the route candidates.
